# NEW EUROPEAN PATENT SPECIFICATION

(11) **EP 4 004 891 B2**
(45) Date of publication and mention of the opposition decision: **18.11.2026**
(45) Mention of the grant of the patent: 28.02.2024
(21) Application number: 20739694.6
(22) Date of filing: 15.07.2020
(51) Int. Cl.: G08C 17/02

(54) **A MONITORING DEVICE FOR DETECTING PRESENCE IN A SPACE AND A METHOD THEREOF**
ÜBERWACHUNGSVORRICHTUNG ZUR ERFASSUNG DER ANWESENHEIT IN EINEM RAUM UND VERFAHREN DAFÜR
DISPOSITIF DE SURVEILLANCE POUR DÉTECTER LA PRÉSENCE DANS UN ESPACE ET PROCÉDÉ ASSOCIÉ

(30) Priority: 25.07.2019 EP 19188386
(43) Date of publication of application: 01.06.2022
(73) Proprietor: Signify Holding B.V., 5656 AE Eindhoven (NL)
(72) Inventor: DEIXLER, Peter, 5656 AE Eindhoven (NL)
(74) Representative: Verweij, Petronella Daniëlle
(86) International application number: PCT/EP2020/070053
(87) International publication number: WO 2021/013659

(56) References cited:
- US-A1- 2008 018 464
- US-A1- 2011 169 637
- US-A1- 2011 169 637
- US-A1- 2017 329 449
- US-A1- 2017 329 449
- US-A1- 2022 108 561
- US-B1- 9 734 697
- US-B1- 9 734 697

## Description

### FIELD OF THE INVENTION

The invention relates to a method of detecting presence in a space, and to a computer program product for executing the method. The invention further relates to a monitoring device for detecting presence in a space.

### BACKGROUND

Smart home systems enable users to control multiple devices in a space, such as a user's home. Such smart lighting systems may comprise multiple controllable devices, sensors, hubs and other devices that communicate via one or more wireless radio frequency (RF) networks. The wireless RF signals communicated between devices can be used to detect presence of people and animals. Recent developments in RF sensing also enable monitoring of physiological parameters of people and animals using RF signals. Such presence sensing and physiological parameter monitoring techniques use one or more RF transmitters and one or more RF communication units for detecting changes in the RF spectrum (e.g. changes in received signal strength indicators (RSSI) of RF signals, changes in signal-to-noise ratio (SNR) of RF signals, changes in time-of-flight (ToF) of RF signals, changes in wireless multipath signals (CSI), etc.). U.S. patent application 2017/0074980 A1 discloses a system for detecting presence, movement of the entire body or body parts and physiological parameters such as breathing rates.

US 2017/0329449 A1 discloses systems for implementing radar-based touch interfaces. A computing device includes a casing; a radar transceiver configured to detect one or more objects in the vicinity of the computing device; and one or more controllers coupled to the radar transceiver, the one or more controllers configured to, for each detected object in the one or more detected objects: (a) determine whether the detected object is in contact with the casing based on data received from the radar transceiver; (b) in accordance with a determination that the detected object is in contact with the casing, identifying an input command based on at least one of: a location of the detected object, and a movement of the detected object; and (c) adjust operation of the computing device based on the input command.

### SUMMARY OF THE INVENTION

It is an object of the present invention to provide an RF monitoring system that enables distinguishing between different (types of) people (or animals).

According to a first aspect of the present invention, the object is achieved by a method of detecting presence in a space, the method comprising:
- entering a monitoring state,
- receiving one or more first signals from one or more radio frequency sensors,
- analyzing the one or more first signals to determine that a being is present in the space,
- controlling, when the presence of the being has been determined, a device configured to provide a stimulus perceivable by the being in the space to provide the stimulus by changing the light output of a lighting unit in the space, wherein the lighting unit is arranged for providing any one of general lighting, task lighting, ambient lighting, atmosphere lighting, accent lighting, indoor lighting, and outdoor lighting,
- receiving one or more second signals from the one or more radio frequency sensors when the stimulus has been provided,
- analyzing the one or more second signals,
- detecting a physical response to the stimulus of the being based on the analyzed one or more second signals,
- generating a notification command and/or a control command based on the physical response, and
- communicating a signal indicative of the notification command and/or the control command to a controllable device or an application.

The one or more first signals received from the one or more radio frequency sensors are analyzed to determine if a being (e.g. a person or an animal) is present in the space. If so, a stimulus-providing device located in the space or nearby the space is controlled to provide a stimulus (e.g. a sound, light, vibration, etc.) that is perceivable for the being (e.g. the person or the animal). The stimulus may be perceivable for an animal (e.g. a dog) but not for a human being (e.g. dog whistle sound). The stimulus may be only perceivable by certain people (e.g. a high frequency audio stimulus may be not heard by a grandfather but by a grandson or a teenage intruder). After providing the stimulus, one or more second signals from the one or more radio frequency sensors are analyzed. These signals are analyzed to determine a physical response of the being to the stimulus (e.g. a change in movement of the being, change in body position, a change of a physical parameter of the being, or no change in movement of the being). The inventors have realized that different beings may respond differently to such responses. For example, an owner of the system may expect the stimulus, whereas an unauthorized person such as an intruder may not expect the stimulus and therefore respond differently to the stimulus, resulting in a different physical response. The physical response is detected, and a notification command or a control command is generated based on the physical response, and communicated to a controllable device or a (software) application. If, for example, the physical response is detected as a movement indicative of that a person is surprised by or scared of the provided stimulus, this may be indicative that this person is an unauthorized person, such as a burglar. The notification command or the control command may for example be indicative of an alarm that an intruder is present, and a law enforcement agency and/or an owner of the monitoring system may be alerted of said presence, or a device may be controlled (e.g. doors may be locked, a camera may be switched on, etc.). Detecting (and optionally classifying) the physical response is beneficial, because it enables distinguishing between different (types of) people (or animals).

The method may further comprise the step of determining if the detected physical response corresponds to an authorized or an unauthorized physical response, and when the detected physical response corresponds to an unauthorized physical response, the signal may be communicated to the controllable device or the application. This may be done by comparing the detected physical response to a set of predefined physical responses stored in a database, wherein a first subset of the set of predefined physical responses represent authorized physical responses, and wherein a second subset of the set of predefined physical responses represent unauthorized physical responses.. When the detected physical response corresponds to an unauthorized physical response of the second subset, the signal may be communicated to the controllable device or the application. Additionally or alternatively, this may be done by comparing the detected physical response to a set of predefined physical responses stored in a database, and if the physical response does not correspond to a response stored in the database, it may be determined that the physical response corresponds to an unauthorized physical response. Additionally or alternatively, this may be done by analyzing characteristics of the one or more second signals (RSSI, SNR, ToF) to determine if the characteristics exceed a threshold. If the threshold is exceeded, it may be determined that the detected physical response corresponds to an unauthorized physical response. This enables to distinguish between authorized and unauthorized people (or animals). The authorization may also be schedule dependent; a cleaning person having the house key may only be authorized on Tuesday afternoon to be within the house.

If the detected physical response corresponds to an authorized physical response, a second signal is communicated to the controllable device or the application. Alternatively, the second signal may be communicated to a second (different) controllable device or a second (different) application. In other words, the receiving controllable device or the application may be selected based on whether the being is authorized or not.

The method may further comprise the steps of activating a learning state, to learn, over a period of time, physical responses to provided stimuli of authorized beings, and storing the physical responses of the authorized being in a database. The method may further comprise switching to the monitoring state. When switched to the monitoring state, if the physical response of the being does not correspond to a physical response of an authorized being, the signal (e.g. an alarm signal) may be communicated to the controllable device or the application. In the learning state, responses of authorized beings (e.g. users/owners of a monitoring/home control system) may be monitored over a period of time in order to learn how one or more authorized beings typically respond to these stimuli. During the training period, the user may be asked to identify himself after a training event occurred (e.g. via a voice assistant). This enables training a system/model for differentiating between authorized and unauthorized beings.

The physical response may be a movement of the being, and the signal may be communicated if the movement corresponds to a predefined movement. The predefined movement may be a movement that occurs within a predefined period of time (e.g. a (quick) body, limb and/or head movement). Additionally or alternatively, the physical response may be a change in breathing or a change in heart rate of the being, and wherein signal may be communicated if the change in breathing or a change in heart rate corresponds to a predefined change. The being's breathing or heart rate, as determined by the RF sensing, may change in response to the stimulus. This enables further distinguishing between different (types of) people (or animals).

The stimulus is a visual stimulus in the form of changing the light output of a lighting unit that is arranged for providing any one of general lighting, task lighting, ambient lighting, atmosphere lighting, accent lighting, indoor lighting, and outdoor lighting. Other examples of stimuli, not covered by the claims, include but are not limited to auditory stimuli (sounds), tactile stimuli (e.g. vibrations, air movement, etc.), visual stimuli (e.g. switching on a display device, etc.), and olfactory stimuli (e.g. a smell provided by smell dispensers).

The method may further comprise identifying the being based on the physical response, and generating the notification and/or the control command based on the identified being. For example, a database may be accessed, which may be configured to store a plurality of physical responses associated with beings, and by comparing the physical response with the plurality of physical responses stored in the database, and by selecting a stored physical response that substantially corresponds to the detected physical response, the being associated with that stored physical response may be selected and identified. This is beneficial, for instance when a household comprises multiple people/animals, because it enables distinguishing between (known) beings. For instance, the RF sensing may monitor the age-dependent heart rate change occurring after the stimulus. While the resting heart rate - the number of times a being's heart beats per minute while the being is relaxed and at rest - does not change significantly with age, it is known that one of the more universal changes with age is in the ability of the heart to increase its rate during exercise and other periods of stress. When challenged to pump faster, the heart rates of younger beings speed up more compared to heart rates of older beings.

The controllable device may be located in the space, or the application may be running on a local device located in the space. The controllable device may, for example, be an alarm system, a lighting device within the space, an automatic door, a voice assistant speaker with a pre-recorded message etc., located in the space. The application may, for example, be an application running on a smartphone, a home control system, a smart assistant, etc., located in the space. Alternatively, the controllable device may be located remotely from the space (e.g. garden lights outside of a house signaling to neighbors by flashing an alarm state), or the application may be running on a remote device located remotely from the space. The controllable device may, for example, be a remote alarm system for informing authorities about an intruder, or the application may be a software application running on a remote device, for instance a personal device of the homeowner.

The one or more first signals may be received from one or more first radio frequency sensors located at a first position with respect to the being, and the one or more second signals may be received from one or more second radio frequency sensors located at a second position with respect to the being. The first position may, for example, be a position higher (e.g. on ceiling level) than the second position (e.g. at head or torso level of a person). This may be beneficial, because the one or more first RF sensors may be configured to detect 'general' presence with less details, whereas the one or more second RF sensors may be configured to detect detailed physical changes such as (minor) movements, changes in physiological parameters such as breathing or changes in heart rate. The one or more second RF sensors may be positioned such that they can detect RF signals transmitted through the body, whereas the one or more first RF sensors may be positioned such that they can only detect RF signals reflected off the being. The one or more first RF sensors may be able to detect changes in RSSI while the second RF sensors may be able to detect changes in the wireless multipath signals (e.g. CSI).

The one or more first signals may be communicated via a first communication technology, and the one or more second signals may be communicated via a second communication technology. The first communication technology may for example be a protocol that has a lower power consumption, and the second communication technology may be a protocol that has a higher power consumption. This may be beneficial to reduce the power consumption of the system. Additionally or alternatively, the first communication technology may for example be a protocol that has a lower bandwidth, and the second communication technology may be a protocol that has a higher data bandwidth. This may be beneficial to reduce communication bandwidth in the network consumed by the RF sensing (e.g. percentage of the 2.4GHz WiFi spectrum occupied by WiFi nodes (e.g. lighting units) performing RF sensing). Examples of communication technologies include but are not limited to Zigbee, Thread, WirelessHART, SmartRF, Bluetooth Mesh, WiFi Mesh, Bluetooth, Bluetooth Low Energy (BLE), wireless local area communication (Wi-Fi), etc.

According to a second aspect of the present invention, the object is achieved by a computer program product comprising computer program code to perform any one of the mentioned methods when the computer program product is run on a processing unit of the computing device.

According to a third aspect of the present invention, the object is achieved by a monitoring device for detecting presence in a space, the monitoring device comprising:
a communication unit configured to receive one or more first signals from one or more radio frequency sensors,
a processor configured to:
   - enter a monitoring state,
   - analyze the one or more first signals to determine that a being is present in the space,
   - control, when the presence of the being has been determined, a device configured to provide a stimulus perceivable by the being in the space to provide the stimulus by changing the light output of a lighting unit in the space, wherein the lighting unit is arranged for providing any one of general lighting, task lighting, ambient lighting, atmosphere lighting, accent lighting, indoor lighting, and outdoor lighting,
   - receive, via the communication unit, one or more second signals from the one or more radio frequency sensors when the stimulus has been provided,
   - analyze the one or more second signals,
   - detect a physical response to the stimulus of the being based on the analyzed one or more second signals,
   - generate a notification command and/or a control command based on the physical response, and
   - communicate a signal indicative of the notification command and/or the control command to a controllable device or an application.

It should be understood that the computer program product and the monitoring device may have similar and/or identical embodiments and advantages as the above-mentioned methods.

### BRIEF DESCRIPTION OF THE DRAWINGS

The above, as well as additional objects, features and advantages of the disclosed systems, devices and methods will be better understood through the following illustrative and non-limiting detailed description of embodiments of devices and methods, with reference to the appended drawings, in which:
Fig. 1 shows schematically an embodiment of a system comprising a monitoring device for detecting presence in a space;
Fig. 2a, 2b and 2c show schematically systems for detecting presence of a person in a space;
Fig. 3 shows schematically a method of detecting presence in a space; and
Fig. 4 shows schematically a method of detecting and differentiating between beings present in a space.

All the figures are schematic, not necessarily to scale, and generally only show parts which are necessary in order to elucidate the invention, wherein other parts may be omitted or merely suggested.

### DETAILED DESCRIPTION OF EMBODIMENTS

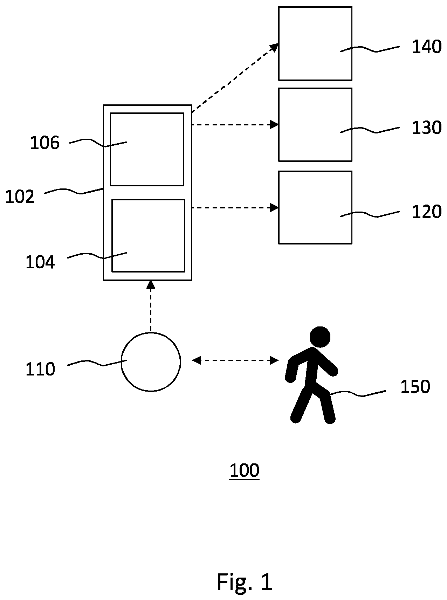

Home and building control systems enable users to control devices in an environment, such as the user's home. Such smart control systems may comprise multiple control devices (such as light switches, sensors, smart hubs, smartphones, etc.) and controllable devices (such as lighting units, audio devices, cameras, etc.) that are connected via a network. Figs. 1 illustrates an example of such a system 100. The system 100 comprises a monitoring device 102 for monitoring presence of beings in a space (e.g. an indoor space such as a room, an outdoor space such as a garden, an alleyway, a front door space, etc.), one or more radio frequency sensors 110 located in the space, a device for providing a stimulus 120 in the space and one or more controllable devices 130 or software applications 140.

The monitoring device 102 is configured to detect presence of beings (persons or animals). The monitoring device 102 may for example be located at or nearby the space. The monitoring device may, for example, be comprised in a central (home) control system, a personal device such as a smartphone, a smart speaker, a hub, a bridge, etc. Alternatively, the monitoring device 102 may be located remotely from the space, and be for example be comprised in a remote (cloud) server or in a monitoring system located remotely from the space.

The monitoring device 102 comprises a communication unit 104 configured to receive one or more first signals from the one or more radio frequency sensors 110. The communication unit 104 may further comprise a transmitter for communicating signals (indicative of notification commands and/or the control commands) to the device 120 for providing the stimulus or the controllable device 130 or application 140. Various wired and wireless communication protocols may be used, for example Ethernet, DMX, DALI, USB, Bluetooth, Wi-Fi, Li-Fi, 3G, 4G, 5G or Zigbee. A specific communication technology may be selected based on the communication capabilities of the monitoring device 102 and/or the controllable device or application, the power consumption of the communication driver for the (wireless) communication technology and/or the desired communication range of the signals. The monitoring device 102 may be comprised in a remote server, the monitoring device 102 may be configured to control the controllable device 130 via an intermediary device such as a bridge, a hub, a central (lighting) control system, a smartphone, etc. This may depend on the system architecture of the system 100.

The monitoring device 102 further comprises a processor 106 (e.g. a microchip, circuitry, a microprocess, etc.) configured to analyze the one or more first signals from the one or more radio frequency sensors 110 to determine that a being 150 (e.g. a person or an animal) is present in the space based on changes in the one or more first signals. Detecting presence based on changes in the RF signals (e.g. changes in received signal strength indicators (RSSI) of RF signals, changes in signal-to-noise ratio (SNR) of RF signals, changes in time-of-flight (ToF) of RF signals, etc.) are known in the art and will not be discussed in detail.

The processor 106 is further configured to control, when the presence of the being 150 has been determined, the device 120 to provide the stimulus in the space. Examples of stimuli include but are not limited to auditory stimuli (sounds), tactile stimuli (e.g. vibrations, air movement, etc.), visual stimuli (e.g. changing the light output of a lighting unit, switching on a display device, etc.), olfactory stimuli (e.g. a smell), etc. The device 120 may, for example, be a lighting unit configured to receive lighting control instructions form the processor 106, and change its light output accordingly to provide the stimulus. The lighting control instructions may, for example, be indicative of a light setting such as a bright light, a flashing light for a stroboscopic effect, etc. The device 120 may, for example, be an audio rendering device (e.g. a home audio system, an alarm system, etc.) configured to receive audio control instructions from the processor 106, and generate audio accordingly. The audio control instructions may, for example, comprise instructions to render an alarm sound or a prerecorded message letting an intruder know that the neighbors have been notified of the alarm. The device 120 may, for example, be a video rendering device (e.g. a display) configured to receive control instructions from the processor 106, and render video images accordingly. The control instructions may, for example, comprise instructions to display a camera feed on the display (for example to indicate to an intruder that he is captured by a camera). It should be understood that these examples of devices 120 and stimuli are mere examples, and that the skilled person is able to design alternatives without departing from the scope of the appended claims.

The processor 106 is further configured to receive one or more second signals from the one or more radio frequency sensors 110 after the stimulus has been provided. The processor 106 may then analyze the one or more second signals to detect (and optionally classify) a physical response to the stimulus of the being 150. The processor 106 may analyze the one or more second signals to detect, for example, a movement or quiver of the being 150 in response to the stimulus. The one or more second signals may analyzed over time, and the processor 106 may detect a change in the signals indicative of an increased amount of movement (e.g. a high SNR of RF signals communicated between two RF nodes, a change in ToF of RF signals communicated between two RF nodes, a Doppler shift of a reflected signal emitted by an RF transceiver, changes in CSI wireless multipath etc.). No change in the one or more second signals may also be an indication of a physical response. This may occur when the being is used to the stimulus and therefore does not respond physically to the stimulus. Additionally or alternatively, the processor 106 may analyze the one or more second signals to detect a change in breathing or a change in heart rate of the being of the being 150 in response to the stimulus. RF signals from 60GHz WiFi nodes may, for example, be used for detecting the breathing rate or the heart rate of the being. Techniques for detecting movement of the entire body or body parts and physiological parameters such as breathing rates and heart rates are known in the art, and are for example disclosed in US 2017/0074980 A1.

The processor 106 is further configured to generating a notification command and/or a control command based on the physical response, and to communicate a signal indicative of the notification command and/or the control command to a controllable device or an application. The processor 106 may, for example, be configured to classify the physical response. The classification may, for example, be based on the amount of change in the one or more second signals, or based on the type of change in the one or more second signals. The processor 106 may, for example, classify the response as a startle response if the amount of change in the one or more second signals exceeds a threshold value, and classify the response as a calm response if the amount of change in the one or more second signals does not exceed the threshold value. The processor 106 may further generate the notification command and/or the control command based on the classified physical response, and communicate the signal indicative of the notification command and/or the control command to the controllable device 130 or application 140.

The monitoring device 102 may be configured to distinguish between authorized and unauthorized beings. The processor 106 may be configured to determine if the detected physical response corresponds to an authorized or an unauthorized physical response, and when the detected physical response corresponds to an unauthorized physical response, the signal may be communicated to the controllable device or the application. The processor 106 may, for example, be configured to compare the detected physical response to a set of predefined physical responses stored in a database. The database may be stored in a memory, which may be comprised in the monitoring device or be located on a remote server accessible via a network such as the internet. A first subset of the set of predefined physical responses may represent authorized physical responses (e.g. known physical responses of authorized users of the system 100) and a second subset of the set of predefined physical responses may represent unauthorized physical responses (e.g. other physical responses of unauthorized people, such as intruders). The second subset of the set of predefined physical responses may comprise responses indicative of a level of movement (or change in physiological parameter) that exceeds a threshold value. Additionally or alternatively, the processor 106 may be configured to compare the detected physical response to a set of predefined physical responses stored in a database, and if the physical response does not correspond to a response stored in the database the processor 106 may determine that the physical response corresponds to an unauthorized physical response. Additionally or alternatively, the processor 106 may analyze characteristics of the one or more second signals (RSSI, SNR, ToF) to determine if the characteristics exceed a threshold. If the threshold is exceeded, the processor 106 may determine that the detected physical response corresponds to an unauthorized physical response.

If the detected physical response corresponds to an unauthorized physical response (e.g. heart rate change associated to the stimulus indicating a younger person than the owner), the processor 106 may communicate the (alarm) signal to the controllable device or the application (e.g. an alarm system and/or a security or monitoring application running on a personal device of an authorized user). In another example, the processor 106 may control a controllable device located in the space based on the identification of the unauthorized being, for instance a local alarm system, an intruder deterrent system (e.g. switching on a lighting unit and/or a display showing a video feed of the intruder), etc. If the detected physical response corresponds to an authorized physical response, a different signal may be communicated to the controllable device or the application, or to another controllable device or application. The authorized being may, for example, be a resident, a cleaning person, a nanny, etc. who frequently visits the space, and their physical response(s) to one or more stimuli may be stored in the database. If the authorized being (e.g. the cleaning person) has been detected, the processor 106 may for example communicate a signal indicative thereof to a personal device of the owner of the monitoring system 100 to inform the owner of the authorized person's presence. In another example, the processor 106 may control a controllable device located in the space based on the identification of the authorized being, for instance an HVAC system, a lighting unit, an audio system, etc.

The processor 106 may be further configured to activate a learning state to learn physical responses of authorized beings. In the learning state, the processor 106 may provide the stimulus via the device 120 when a being is present, and store the physical response of the authorized being in the database. The processor 106 may repeat this process to learn, over time, physical responses to provided stimuli of one or more authorized beings, and store these physical responses of the authorized being in a database.

The processor 106 may be further configured to distinguish classes of beings based on their physical responses (when the monitoring state and/or to the learning state is active). The processor 106 may, for example, distinguish between different types of people (e.g. children, grown-ups, different body-masses, etc.) and/or distinguish between people and animals (e.g. pets). Additionally or alternatively, the processor 106 may be further configured to identify the being based on the physical response. Different beings may have different physical responses to the provided stimulus. The responses of these beings may be learned when the processor 106 has been set to the learning state. This enables the processor 106 to, when set to the monitoring state, identify beings. While in the learning state, the processor 106 may detect the physical responses of the beings, and receive an input indicative of the identity or the class of being. The input may be received from a user via a user interface. Additionally or alternatively, the input may be received from a further device, e.g. a camera system configured to identify classes of beings present in the space.

The processor 106 may be further configured to generate the notification and/or the control command based on the identified being or based on the class of the detected being. In a first example, the processor 106 may generate, when a first class of being has been detected (e.g. a child), a first notification (e.g. a notification to inform a parent that the child is home) and transmit the signal indicative of the first notification (e.g. to a software application 140 running on a personal device of the parent). When a second class of being has been detected (e.g. an adult), the processor 106 may generate a second notification (e.g. to send a welcome home message to the adult) and transmit the signal indicative of the second notification (e.g. to a software application 140 running on a personal device of the adult). In another example, the processor 106 may generate and transmit a first control command for a first device (e.g. an instruction to display the news on a tv) when a first user has been identified, and generate and transmit a second control command for a second device (e.g. an instruction to play certain music on an audio system) when a second user has been identified. The processor 106 may be configured to access a database to determine which notification command or control command to generate. The database may store associations between beings (that are to be identified) and notification commands or control commands, and/or associations classes of beings and notification commands or control commands, enabling the processor 106 to select/generate a notification command or control command for the identified being or class.

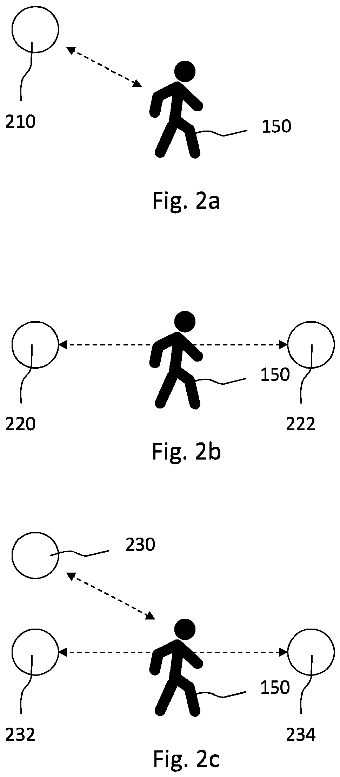

The system 100 may comprise one or more radio frequency sensors 110. The system 100 may, for example, comprise a single RF sensor configured to transmit an RF signal and receive its reflection. The single sensor may communicate the reflected first signals to the monitoring device 102, which may be analyzed to determine that a being is present in the space. Based on changes in reflection (e.g. due to Doppler shift or changes in time of flight), presence of a being can be detected. This has been illustrated in Fig. 2a. The sensor 210 may be configured to transmit a first RF signal and receive a reflection thereof to detect that a being 150 is present. If so, the stimulus is provided by the device 120 (not shown) and the processor 106 may detect changes in reflected second signal transmitted by the sensor 210, indicative of the physical response.

Fig. 2b illustrates a system 100 comprising two RF nodes 220, 222. These nodes may each comprise an RF transceiver for transmitting and receiving RF signals. The two RF nodes 220, 222 may be configured to detect RF signals transmitted through the body. When a being 150 is present between the nodes 220, 222, the RSSI, CSI or the SNR of the communicated first signals changes, which indicates the presence of the being. The stimulus may then be provided by the device 120, and the processor 106 may detect changes in one or more second signals communicated between the nodes 220, 222 indicative of the physical response.

Fig. 2c illustrates a system 100 comprising three RF nodes 230, 232, 234. The one or more first signals may be received from one or more first radio frequency sensors (node 230) located at a first position with respect to the being 150, and the one or more second signals may be received from one or more second radio frequency sensors (nodes 232, 234) located at a second position with respect to the being 150. The first position may, for example, be a position higher (e.g. on ceiling level) than the second position (e.g. at head or torso level of a person). The one or more first RF sensors 230 may be configured to provide the first signals to the processor 106 indicative of 'general' presence with less details, whereas the one or more second RF sensors may be configured to provide the second signals indicative of detailed physical changes such as (minor) movements, changes breathing or changes in heart rate.

The one or more first signals may be communicated via a first communication technology, and the one or more second signals may be communicated via a second communication technology. The first communication technology may for example be a communication technology that has a lower power consumption, and the second communication technology may be a communication technology that has a higher power consumption. Additionally or alternatively, the first communication technology may for example be a communication technology that has a lower bandwidth, and the second communication technology may be a communication technology that has a higher power bandwidth. The first (wireless) communication technology may be a multi-hop communication technology (such as Zigbee, Thread, WirelessHART, SmartRF, Bluetooth Mesh, WiFi Mesh, or any other mesh or tree-based technology), and the second (wireless) communication technology may be a point-to-point communication technology (such as Bluetooth, Bluetooth Low Energy (BLE), Infrared (IR), near field communication (NFC), wireless local area communication (Wi-Fi), etc.). Typically, RF signals of point-to-point communication technologies are stronger compared to RF signals of multi-hop communication technologies. Hence, low-signal strength (first) signals of a multi-hop communication technology (e.g. Zigbee) may be analyzed to detect presence, and higher-signal strength (second) signals of a point-to-point communication technology (e.g. Bluetooth, Wi-Fi) may be analyzed to detect the physical response.

When the first one or more RF signals and the second one or more RF signals are received from the same (set of) RF sensors (which may be comprised in lighting units), these sensors may comprise one or more communication modules for communicating via different communication technologies. These communication modules may be separate units (e.g. separate radio chips) comprised in the sensors, or both be comprised on a single radio chip, allowing a low-cost device to operate as part of both a first network and a second network at the same time, leveraging a single wireless radio module. This may be achieved by fast switching the first and second communication technology (e.g. Zigbee and Bluetooth) operations over time such that the sensor (or device comprising the sensor, such as a lighting unit) remains connected and operates in both networks simultaneously. The possibility of having a constrained device operating simultaneously on two networks opens up new solutions to improve the limitations of these existing technologies.

The one or more radio frequency sensors may be comprised in respective lighting units. Current smart homes typically contain a plurality of connected lighting devices that communicate via a (mesh) network. The RF signals communicated between these lighting units may be analyzed for determining presence and for determining the physical response of the being 150. The RF signals communicated between the lighting devices may comprise lighting control instructions and/or configuration instructions, and these RF signals may additionally be analyzed for determining presence and for determining the physical response of the being 150. Hence, there is no need for dedicated (RF) sensors for detecting presence. The one or more lighting units may be any type of lighting units. The lighting units may comprise one or more light sources (e.g. LED/OLED light sources). The lighting units are arranged for providing any one of general lighting, task lighting, ambient lighting, atmosphere lighting, accent lighting, indoor lighting, and outdoor lighting.

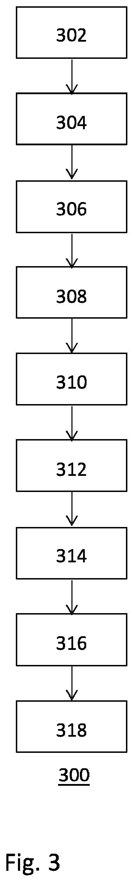

Fig. 3 shows schematically a method 300 of detecting presence in a space, the method 300 comprising: entering 302 a monitoring state, receiving 304 one or more first signals from one or more radio frequency sensors, analyzing 306 the one or more first signals to determine that a being is present in the space, controlling 308, when the presence of the being has been determined, a device configured to provide a stimulus perceivable by a being in the space to provide the stimulus, receiving 310 one or more second signals from the one or more radio frequency sensors when the stimulus has been provided, analyzing 312 the one or more second signals, detecting 314 a physical response to the stimulus of the being based on the analyzed one or more second signals, generating 316 a notification command and/or a control command based on the physical response, and communicating 318 a signal indicative of the notification command and/or the control command to a controllable device or an application.

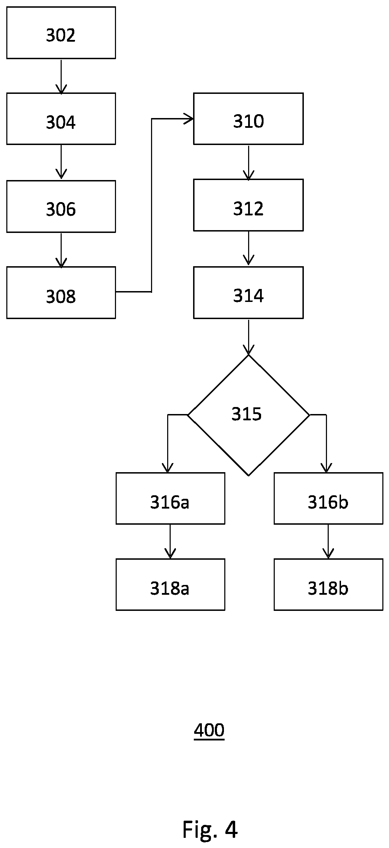

Fig. 4 shows schematically a method 400 of detecting and differentiating between beings present in a space. The method 400 comprises the steps of the method 300 of Fig. 3, and further comprising the steps of: comparing 315 the detected physical response to a set of predefined physical responses stored in a database, wherein a first subset of the set of predefined physical responses represent authorized physical responses, and wherein a second subset of the set of predefined physical responses represent unauthorized physical responses. The method 400 comprises generating 316a, when the detected physical response corresponds to an unauthorized physical response of the second subset, a first notification command and/or a first control command based on the physical response, and communicating 318a a first signal indicative of the first notification command and/or the first control command to a controllable device or an application. The method 400 comprises generating 316b, when the detected physical response corresponds to an authorized physical response of the second subset, a second notification command and/or a second control command based on the physical response, and communicating 318a a second signal indicative of the second notification command and/or the second control command to a controllable device or an application (the controllable device/application may be the same or a different controllable device/application).

The methods 300, 400 may be executed by computer program code of a computer program product when the computer program product is run on a processing unit of a computing device, such as the processor 106 of the monitoring device 102.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer or processing unit. In the device claim enumerating several means, several of these means may be embodied by one and the same item of hardware. The mere fact that certain measures are recited in mutually different dependent claims does not indicate that a combination of these measures cannot be used to advantage.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors or even the 'cloud'.

Storage media suitable for storing computer program instructions include all forms of nonvolatile memory, including but not limited to EPROM, EEPROM and flash memory devices, magnetic disks such as the internal and external hard disk drives, removable disks and CD-ROM disks. The computer program product may be distributed on such a storage medium, or may be offered for download through HTTP, FTP, email or through a server connected to a network such as the Internet.

## Claims

1. A method (300) of detecting presence in a space, the method comprising:
- entering (302) a monitoring state,
- receiving (304) one or more first signals from one or more radio frequency sensors,
- analyzing (306) the one or more first signals to determine that a being is present in the space,
- controlling (308), when the presence of the being has been determined, a device configured to provide a stimulus perceivable by the being in the space to provide the stimulus by changing the light output of a lighting unit in the space, wherein the lighting unit is arranged for providing any one of general lighting, task lighting, ambient lighting, atmosphere lighting, accent lighting, indoor lighting, and outdoor lighting,
- receiving (310) one or more second signals from the one or more radio frequency sensors when the stimulus has been provided,
- analyzing (312) the one or more second signals,
- detecting (314) a physical response to the stimulus of the being based on the analyzed one or more second signals,
- generating (316) a notification command and/or a control command based on the physical response, and
- communicating (318) a signal indicative of the notification command and/or the control command to a controllable device or an application.

2. The method (300) of any preceding claim, further comprising:
- determining if the detected physical response corresponds to an authorized or an unauthorized physical response, and when the detected physical response corresponds to an unauthorized physical response, the signal is communicated to the controllable device or the application.

3. The method (300) of claim 2, wherein, if the detected physical response corresponds to an authorized physical response, a second signal (318b) is communicated to the controllable device or the application.

4. The method (300) of claim 2, wherein, if the detected physical response corresponds to an authorized physical response, a second signal (318b) is communicated to a second controllable device or a second application.

5. The method (300) of any preceding claim, further comprising the steps of:
- activating a learning state,
- learning, over time, physical responses to provided stimuli of one or more authorized beings, and
- storing the physical responses of the authorized being in a database.

6. The method (300) of any preceding claim wherein the physical response is a movement of the being, and wherein the signal is communicated if the movement corresponds to a predefined movement.

7. The method (300) of any preceding claim wherein the physical response is a change in breathing or a change in heart rate of the being, and wherein the signal is communicated if the change in breathing or a change in heart rate corresponds to a predefined change.

8. The method (300) of any preceding claim, further comprising the step of:
- identifying the being based on the physical response, and
- generating the notification and/or the control command based on the identified being.

9. The method (300) of any preceding claim, wherein the controllable device is located in the space.

10. The method (300) of any preceding claim, wherein the controllable device is located remotely from the space, or wherein the application is running on a remote device located remotely from the space.

11. The method (300) of any preceding claim, wherein the one or more first signals are received from one or more first radio frequency sensors located at a first position with respect to the being, and wherein the one or more second signals are received from one or more second radio frequency sensors located at a second position with respect to the being.

12. The method (300) of any preceding claim, wherein the one or more first signals are communicated via a first communication technology, and wherein the one or more second signals are communicated via a second communication technology.

13. A computer program product for a computing device, the computer program product comprising computer program code to perform the method (300) of any one of claim 1-12 when the computer program product is run on a processing unit of the computing device.

14. A monitoring device (102) for detecting presence in a space, the monitoring device (102) comprising:
a communication unit (104) configured to receive one or more first signals from one or more radio frequency sensors (110),
a processor (106) configured to:
- enter a monitoring state,
- analyze the one or more first signals to determine that a being (150) is present in the space,
- control, when the presence of the being has been determined, a device (120) configured to provide a stimulus perceivable by the being (150) in the space to provide the stimulus by changing the light output of a lighting unit in the space, wherein the lighting unit is arranged for providing any one of general lighting, task lighting, ambient lighting, atmosphere lighting, accent lighting, indoor lighting, and outdoor lighting,
- receive, via the communication unit (104), one or more second signals from the one or more radio frequency sensors (110) when the stimulus has been provided,
- analyze the one or more second signals,
- identify a physical response to the stimulus of the being (150) based on the analyzed one or more second signals,
- generate a notification command and/or a control command based on the physical response, and
- communicate a signal indicative of the notification command and/or the control command to a controllable device (130) or an application (140).

## Patentansprüche

1. Verfahren (300) zum Erfassen einer Anwesenheit in einem Raum, das Verfahren umfassend:
- Eintreten (302) in einen Überwachungszustand,
- Empfangen (304) eines oder mehrerer erster Signale von einem oder mehreren Hochfrequenzsensoren,
- Analysieren (306) des einen oder der mehreren ersten Signale, um zu bestimmen, dass ein Lebewesen in dem Raum anwesend ist,
- Steuern (308), wenn die Anwesenheit des Lebewesens bestimmt wurde, einer Vorrichtung, die konfiguriert ist, um einen durch das Lebewesen in dem Raum wahrnehmbaren Stimulus bereitzustellen, um den Stimulus durch Ändern der Lichtabgabe einer Beleuchtungseinheit in dem Raum bereitzustellen, wobei die Beleuchtungseinheit zum Bereitstellen einer beliebigen von einer Allgemeinbeleuchtung, Arbeitsbeleuchtung, Umgebungsbeleuchtung, Atmosphärenbeleuchtung, Akzentbeleuchtung, Innenbeleuchtung und Außenbeleuchtung eingerichtet ist,
- Empfangen (310) eines oder mehrerer zweiter Signale von dem einen oder den mehreren Hochfrequenzsensoren, wenn der Stimulus bereitgestellt wurde,
- Analysieren (312) des einen oder der mehreren zweiten Signale,
- Erfassen (314) einer physischen Reaktion des Lebewesens auf den Stimulus basierend auf dem einen oder den mehreren analysierten zweiten Signalen,
- Erzeugen (316) eines Benachrichtigungsbefehls und/oder eines Steuerbefehls basierend auf der physischen Reaktion, und
- Kommunizieren (318) eines den Benachrichtigungsbefehl und/oder den Steuerbefehl anzeigenden Signals an eine steuerbare Vorrichtung oder eine Anwendung.

2. Verfahren (300) nach einem der vorstehenden Ansprüche, ferner umfassend:
- Bestimmen, ob die erfasste physische Reaktion einer autorisierten oder einer nicht-autorisierten physischen Reaktion entspricht, und wenn die erfasste physische Reaktion einer nicht-autorisierten physischen Reaktion entspricht, Kommunizieren des Signals an die steuerbare Vorrichtung oder die Anwendung.

3. Verfahren (300) nach Anspruch 2, wobei, falls die erfasste physische Reaktion einer autorisierten physischen Reaktion entspricht, ein zweites Signal (318b) an die steuerbare Vorrichtung oder die Anwendung kommuniziert wird.

4. Verfahren (300) nach Anspruch 2, wobei, falls die erfasste physische Reaktion einer autorisierten physischen Reaktion entspricht, ein zweites Signal (318b) an eine zweite steuerbare Vorrichtung oder eine zweite Anwendung kommuniziert wird.

5. Verfahren (300) nach einem der vorstehenden Ansprüche, ferner umfassend die Schritte:
- Aktivieren eines Lernzustands,
- Lernen, im Laufe der Zeit, von physischen Reaktionen auf bereitgestellte Stimuli eines oder mehrerer autorisierter Lebewesen, und
- Speichern der physischen Reaktionen des autorisierten Lebewesens in einer Datenbank.

6. Verfahren (300) nach einem der vorstehenden Ansprüche, wobei die physische Reaktion eine Bewegung des Lebewesens ist und wobei das Signal kommuniziert wird, falls die Bewegung einer vordefinierten Bewegung entspricht.

7. Verfahren (300) nach einem der vorstehenden Ansprüche, wobei die physische Reaktion eine Änderung einer Atmung oder eine Änderung einer Herzfrequenz des Lebewesens ist und wobei das Signal kommuniziert wird, falls die Änderung der Atmung oder eine Änderung der Herzfrequenz einer vordefinierten Änderung entspricht.

8. Verfahren (300) nach einem der vorstehenden Ansprüche, ferner umfassend den Schritt:
- Identifizieren des Lebewesens basierend auf der physischen Reaktion und
- Erzeugen des Benachrichtigungs- und/oder des Steuerbefehls basierend auf dem identifizierten Lebewesen.

9. Verfahren (300) nach einem der vorstehenden Ansprüche, wobei sich die steuerbare Vorrichtung in dem Raum befindet.

10. Verfahren (300) nach einem der vorstehenden Ansprüche, wobei sich die steuerbare Vorrichtung entfernt von dem Raum befindet oder wobei die Anwendung auf einer entfernten Vorrichtung ausgeführt wird, die sich entfernt von dem Raum befindet.

11. Verfahren (300) nach einem der vorstehenden Ansprüche, wobei das eine oder die mehreren ersten Signale von einem oder mehreren ersten Hochfrequenzsensoren empfangen werden, die sich an einer ersten Position in Bezug auf das Lebewesen befinden, und wobei das eine oder die mehreren zweiten Signale von einem oder mehreren zweiten Hochfrequenzsensoren empfangen werden, die sich an einer zweiten Position in Bezug auf das Lebewesen befinden.

12. Verfahren (300) nach einem der vorstehenden Ansprüche, wobei das eine oder die mehreren ersten Signale über eine erste Kommunikationstechnologie kommuniziert werden und wobei das eine oder die mehreren zweiten Signale über eine zweite Kommunikationstechnologie kommuniziert werden.

13. Computerprogrammprodukt für eine Rechenvorrichtung, das Computerprogrammprodukt umfassend Computerprogrammcode, um das Verfahren (300) nach einem der Ansprüche 1 bis 12 durchzuführen, wenn das Computerprogrammprodukt auf einer Verarbeitungseinheit der Rechenvorrichtung ausgeführt wird.

14. Überwachungsvorrichtung (102) zum Erfassen der Anwesenheit in einem Raum, die Überwachungsvorrichtung (102) umfassend:
eine Kommunikationseinheit (104), die konfiguriert ist, um ein oder mehrere erste Signale von einem oder mehreren Hochfrequenzsensoren (110) zu empfangen,
einen Prozessor (106), der konfiguriert ist zum:
- Eintreten in einen Überwachungszustand,
- Analysieren des einen oder der mehreren ersten Signale, um zu bestimmen, dass ein Lebewesen (150) in dem Raum anwesend ist,
- Steuern, wenn die Anwesenheit des Lebewesens bestimmt wurde, einer Vorrichtung (120), die konfiguriert ist, um einen durch das Lebewesen (150) in dem Raum wahrnehmbaren Stimulus bereitzustellen, um den Stimulus durch Ändern der Lichtabgabe einer Beleuchtungseinheit in dem Raum bereitzustellen, wobei die Beleuchtungseinheit zum Bereitstellen einer beliebigen von einer Allgemeinbeleuchtung, Arbeitsbeleuchtung, Umgebungsbeleuchtung, Atmosphärenbeleuchtung, Akzentbeleuchtung, Innenbeleuchtung und Außenbeleuchtung eingerichtet ist,
- Empfangen, über die Kommunikationseinheit (104), eines oder mehrerer zweiter Signale von dem einen oder den mehreren Hochfrequenzsensoren (110), wenn der Stimulus bereitgestellt wurde,
- Analysieren des einen oder der mehreren zweiten Signale,
- Identifizieren einer physischen Reaktion des Lebewesens (150) auf den Stimulus basierend auf dem einen oder den mehreren analysierten zweiten Signalen,
- Erzeugen eines Benachrichtigungsbefehls und/oder eines Steuerbefehls basierend auf der physischen Reaktion, und
- Kommunizieren eines den Benachrichtigungsbefehl und/oder den Steuerbefehl anzeigenden Signals an eine steuerbare Vorrichtung (130) oder eine Anwendung (140).

## Revendications

1. Procédé (300) de détection d'une présence dans un espace, le procédé comprenant :
- l'entrée (302) dans un état de surveillance,
- la réception (304) d'un ou de plusieurs premiers signaux à partir d'un ou de plusieurs capteurs radiofréquence,
- l'analyse (306) du ou des premiers signaux pour déterminer qu'un être est présent dans l'espace,
- la commande (308), lorsque la présence de l'être a été déterminée, d'un dispositif configuré pour fournir un stimulus perceptible par l'être dans l'espace pour fournir le stimulus en changeant l'émission de lumière d'une unité d'éclairage dans l'espace, dans lequel l'unité d'éclairage est agencée pour fournir l'un quelconque parmi un éclairage général, un éclairage de tâche, un éclairage d'ambiance, un éclairage d'atmosphère, un éclairage d'accentuation, un éclairage intérieur et un éclairage extérieur,
- la réception (310) d'un ou de plusieurs seconds signaux à partir du ou des capteurs radiofréquence lorsque le stimulus a été fourni,
- l'analyse (312) du ou des seconds signaux,
- la détection (314) d'une réponse physique au stimulus de l'être sur la base du ou des seconds signaux analysés,
- la génération (316) d'un ordre de notification et/ou d'un ordre de commande sur la base de la réponse physique, et
- la communication (318) d'un signal indiquant l'ordre de notification et/ou l'ordre de commande à un dispositif pouvant être commandé ou à une application.

2. Procédé (300) selon l'une quelconque revendication précédente, comprenant en outre :
- la détermination du fait de savoir si la réponse physique détectée correspond à une réponse physique autorisée ou non autorisée, et lorsque la réponse physique détectée correspond à une réponse physique non autorisée, le signal est communiqué au dispositif pouvant être commandé ou à l'application.

3. Procédé (300) selon la revendication 2, dans lequel, si la réponse physique détectée correspond à une réponse physique autorisée, un second signal (318b) est communiqué au dispositif pouvant être commandé ou à l'application.

4. Procédé (300) selon la revendication 2, dans lequel, si la réponse physique détectée correspond à une réponse physique autorisée, un second signal (318b) est communiqué à un second dispositif pouvant être commandé ou à une seconde application.

5. Procédé (300) selon l'une quelconque revendication précédente, comprenant en outre les étapes consistant à :
- activer un état d'apprentissage,
- apprendre, au fil du temps, des réponses physiques à des stimuli fournis d'un ou de plusieurs êtres autorisés, et
- stocker les réponses physiques de l'être autorisé dans une base de données.

6. Procédé (300) selon l'une quelconque revendication précédente, dans lequel la réponse physique est un mouvement de l'être, et dans lequel le signal est communiqué si le mouvement correspond à un mouvement prédéfini.

7. Procédé (300) selon l'une quelconque revendication précédente, dans lequel la réponse physique est un changement dans la respiration ou un changement dans la fréquence cardiaque de l'être, et dans lequel le signal est communiqué si le changement dans la respiration ou un changement dans la fréquence cardiaque correspond à un changement prédéfini.

8. Procédé (300) selon l'une quelconque revendication précédente, comprenant en outre les étapes consistant à :
- identifier l'être sur la base de la réponse physique, et
- générer l'ordre de notification et/ou de commande sur la base de l'être identifié.

9. Procédé (300) selon l'une quelconque revendication précédente, dans lequel le dispositif pouvant être commandé est situé dans l'espace.

10. Procédé (300) selon l'une quelconque revendication précédente, dans lequel le dispositif pouvant être commandé est situé à distance de l'espace, ou dans lequel l'application est exécutée sur un dispositif distant situé à distance de l'espace.

11. Procédé (300) selon l'une quelconque revendication précédente, dans lequel le ou les premiers signaux sont reçus à partir d'un ou de plusieurs premiers capteurs radiofréquence situés à une première position par rapport à l'être, et dans lequel le ou les seconds signaux sont reçus à partir d'un ou de plusieurs seconds capteurs radiofréquence situés à une seconde position par rapport à l'être.

12. Procédé (300) selon l'une quelconque revendication précédente, dans lequel le ou les premiers signaux sont communiqués par l'intermédiaire d'une première technologie de communication, et dans lequel le ou les seconds signaux sont communiqués par l'intermédiaire d'une seconde technologie de communication.

13. Produit-programme d'ordinateur pour un dispositif informatique, le produit-programme d'ordinateur comprenant un code de programme informatique pour réaliser le procédé (300) selon l'une quelconque des revendications 1 à 12 lorsque le produit-programme d'ordinateur est exécuté sur une unité de traitement du dispositif informatique.

14. Dispositif de surveillance (102) permettant de détecter une présence dans un espace, le dispositif de surveillance (102) comprenant :
une unité de communication (104) configurée pour recevoir un ou plusieurs premiers signaux à partir d'un ou de plusieurs capteurs radiofréquence (110),
un processeur (106) configuré pour :
- entrer dans un état de surveillance,
- analyser le ou les premiers signaux pour déterminer qu'un être (150) est présent dans l'espace,
- commander, lorsque la présence de l'être a été déterminée, un dispositif (120) configuré pour fournir un stimulus perceptible par l'être (150) dans l'espace pour fournir le stimulus en changeant l'émission de lumière d'une unité d'éclairage dans l'espace, dans lequel l'unité d'éclairage est agencée pour fournir l'un quelconque parmi un éclairage général, un éclairage de tâche, un éclairage d'ambiance, un éclairage d'atmosphère, un éclairage d'accentuation, un éclairage intérieur et un éclairage extérieur,
- recevoir, par l'intermédiaire de l'unité de communication (104), un ou plusieurs seconds signaux à partir du ou des capteurs radiofréquence (110) lorsque le stimulus a été fourni,
- analyser le ou les seconds signaux,
- identifier une réponse physique au stimulus de l'être (150) sur la base du ou des seconds signaux analysés,
- générer un ordre de notification et/ou un ordre de commande sur la base de la réponse physique, et
- communiquer un signal indiquant l'ordre de notification et/ou l'ordre de commande à un dispositif pouvant être commandé (130) ou à une application (140).
